# FASCICULE DE BREVET EUROPEEN

(11) **EP 2 300 866 B1**
(45) Date de publication et mention de la délivrance du brevet: **09.05.2012**
(21) Numéro de dépôt: 09784384.1
(22) Date de dépôt: 13.05.2009
(51) Int. Cl.: G02C 5/00, G02C 5/08, G02C 5/22

(54) **LUNETTES A BRANCHES RETRACTABLES**
BRILLE MIT EINZIEHBAREN BÜGELN
SPECTACLES HAVING RETRACTABLE SIDEPIECES

(30) Priorité: 17.07.2008 FR 0854855
(43) Date de publication de la demande: 30.03.2011
(73) Titulaire: Logo SA, 39400 Morez (FR)
(72) Inventeur: JACQUEMIN, Didier, F-39400 La Mouille (FR)
(74) Mandataire: Brungard, Yves Francois
(86) Numéro de dépôt international: PCT/FR2009/050885
(87) Numéro de publication internationale: WO 2010/007262

(56) Documents cités:
- FR-A- 2 891 064
- US-A- 5 448 317
- US-A- 6 158 860
- US-A1- 2004 141 148
- US-A1- 2005 146 675

## Description

La présente invention concerne des lunettes constituées, d'une manière générale, d'une façade optique ou solaire, reliée à deux branches latérales de soutien.

Un problème majeur dans le domaine des lunettes tient à leur encombrement en position de rangement, c'est-à-dire après avoir replié les branches par rapport à la façade optique ou solaire.

Bon nombre de solutions ont déjà été proposées pour résoudre ce problème, comme par exemple en prévoyant des branches télescopiques permettant également d'ajuster leur longueur à la morphologie de l'utilisateur, mais le nombre élevé de degrés de liberté obtenus à partir de glissières ou de charnières provoque une perte de rigidité des branches.

De plus, lors de mouvements brusques de la part de l'utilisateur, volontaires ou involontaires, il pourra se produire un allongement ou un raccourcissement intempestif de la branche.

Toujours dans le but de réduire l'encombrement des lunettes, il a également été proposé des lunettes pliables, c'est-à-dire dont la monture est constituée par deux parties articulées entre elles au niveau du pont central, permettant donc de superposer les deux parties.

Sont ainsi connues des lunettes selon le brevet américain N° 2005/146675, constituées par une façade optique ou solaire reliée à deux branches latérales, chacune d'elles étant reliée à la façade par l'intermédiaire d'un axe de rotation sensiblement perpendiculaire à celle-ci, la façade présentant un rayon de courbure sensiblement égale à celui de la branche, pour permettre la rotation de la branche, entre une position d'utilisation et une position de rangement devant la façade.

Des lunettes de ce type sont également connues par le brevet américain N° 2004/141148 et sont associées à des branches télescopiques ou pliables, mais présentent l'inconvénient de nécessiter, lors du rangement ou de l'utilisation des lunettes, un nombre d'opérations important pour les déplier puis ajuster et verrouiller la longueur de chaque branche.

La présente invention a pour but de remédier à ces différents problèmes, liés essentiellement au nombre de manipulations pour obtenir un ensemble compact de lunettes en position de rangement, éviter également les ajustements de longueur de branches s'effectuant manuellement, et enfin protéger les verres dans une position de rangement de l'ensemble de lunettes.

A cet effet, l'invention concerne des lunettes constituées d'une façade optique ou solaire reliée à deux branches latérales, chacune d'elles étant reliée à la façade par l'intermédiaire d'un axe de rotation sensiblement perpendiculaire à celle-ci, la façade présentant un rayon de courbure sensiblement égale à celui de la branche, pour permettre la rotation de la branche, entre une position d'utilisation et une position de rangement devant la façade, lesdites lunettes se caractérisant en ce que la dite branche se décompose en deux parties, la première étant solidaire de l'axe de rotation central, la seconde étant reliée à la première par des moyens d'entraînement en translation intermédiaires, interposés entre les deux parties et agissant progressivement sur la dite seconde partie au cours de la rotation de la première, et conséquemment de la seconde, pour impliquer à celle-ci deux mouvements conjugués, l'un rotatif, l'autre linéaire, afin d'obtenir automatiquement et simultanément un allongement de la branche lorsqu'on la tourne vers une position d'utilisation et un raccourcissement de la même branche, lorsqu'on la tourne vers une position de rangement.

Cette description donnée à titre d'exemple non limitatif, fera mieux comprendre comment l'invention peut être réalisée en référence aux dessins annexés sur lesquels:
La figure 1 représente une vue en perspective d'une paire de lunettes selon l'invention, en position d'utilisation, c'est-à-dire branches allongées au maximum.
La figure 2 représente une vue en perspective des lunettes selon la figure 1, mais en position de rangement, c'est-à-dire avec un raccourcissement maximum des branches, devant la face optique.
La figure 3 représente une vue en perspective des lunettes selon les figures 1 et 2, après rangement des branches et pliage de la monture sur elle-même.
La figure 4 représente une vue de détails, en perspective éclatée et à échelle agrandie montrant le mécanisme d'entraînement en translation d'une deuxième partie de branche par rapport à la première et par rapport à la monture, sur laquelle l'ensemble de branche est entraîné en rotation, selon un premier mode de réalisation.
La figure 5 est une vue en perspective, à échelle agrandie selon la figure 4, après montage des parties constitutives de la branche par rapport à la monture.
Les figures 6A, 6B, 6C représentent schématiquement la cinématique du dispositif d'entraînement en rotation et en translation simultanée de la branche, selon le mode de réalisation des figures 4 et 5, respectivement en position raccourcie de rangement, en position intermédiaire d'ouverture et en position maximum de déploiement de la branche.
Les figures 7A, 7B, 7C sont similaires aux figures 6A, 6B, 6C, mais selon une réalisation concrète, non schématique.
La figure 8 représente, selon un autre sens que la figure 4, une vue de détails en perspective éclatée et à échelle agrandie montrant le mécanisme d'entraînement en translation d'une deuxième partie de branche par rapport à la première et par rapport à la monture, sur laquelle l'ensemble de branches est entraîné en rotation, selon un premier mode de réalisation.
La figure 9 est une vue en perspective éclatée de l'ensemble de lunettes, selon le mode de réalisation des figures 4 à 7.
La figure 10 représente un mécanisme d'entraînement en translation et en rotation d'une branche de lunettes selon un second mode de réalisation.
La figure 11 représente un mécanisme d'entraînement en translation et en rotation d'une branche de lunettes selon un troisième mode de réalisation.
La figure 12 représente un mécanisme d'entraînement en translation et en rotation d'une branche de lunettes selon un quatrième mode de réalisation.

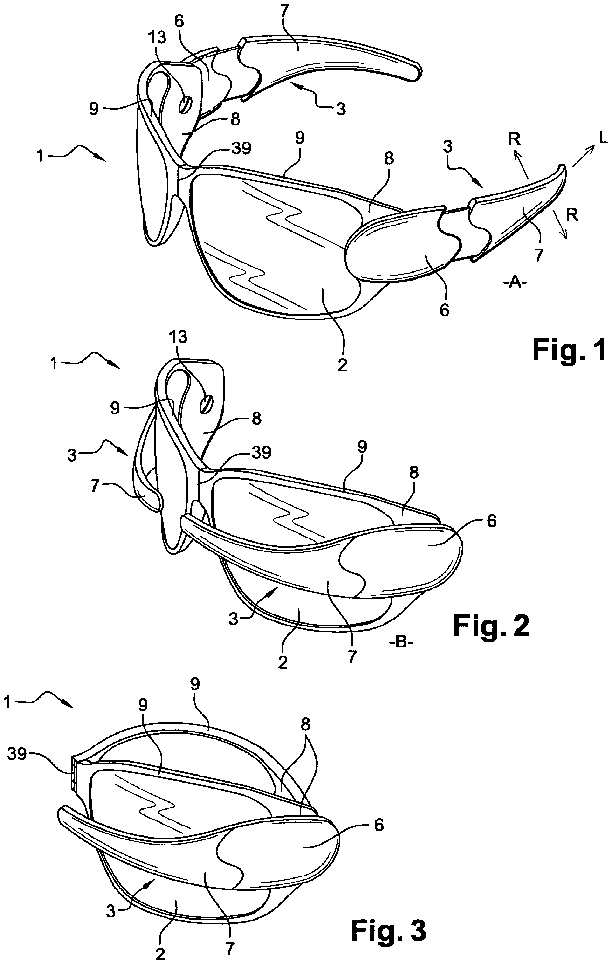

Les lunettes 1 désignées dans leur ensemble et bien visibles dans leur globalité sur les figures 1, 2 et 3 sont constituées d'une façade optique ou solaire 2 reliée à deux branches latérales 3, chacune d'elles étant reliée à la façade 2 par l'intermédiaire d'un axe 4,5 sensiblement perpendiculaire à celle-ci, pour permettre la rotation de la branche 3 sur elle-même, entre une position d'utilisation « A » et une position de rangement « B » devant la façade 2 présentant un rayon de courbure sensiblement égal à celui de la branche 3.

Selon l'invention, la dite branche 3 se décompose en deux parties 6,7, la première 6 étant solidaire de l'axe de rotation central 4,5, la seconde 7 étant reliée à la première 6 par des moyens d'entraînement en translation intermédiaires, interposés entre les deux parties et agissant progressivement sur la dite seconde partie 7 au cours de la rotation de la première 6, et conséquemment de la seconde 7, pour impliquer à celle-ci deux mouvements conjugués, l'un rotatif « R », l'autre linéaire « L », afin d'obtenir automatiquement et simultanément un allongement de la branche 3 lorsqu'on la tourne vers une position d'utilisation « A » et un raccourcissement de la même branche, lorsqu'on la tourne vers une position de rangement « B ».

Bien entendu, la branche 3 est formée à son extrémité libre pour être apte à venir en contact avec l'oreille d'un utilisateur.

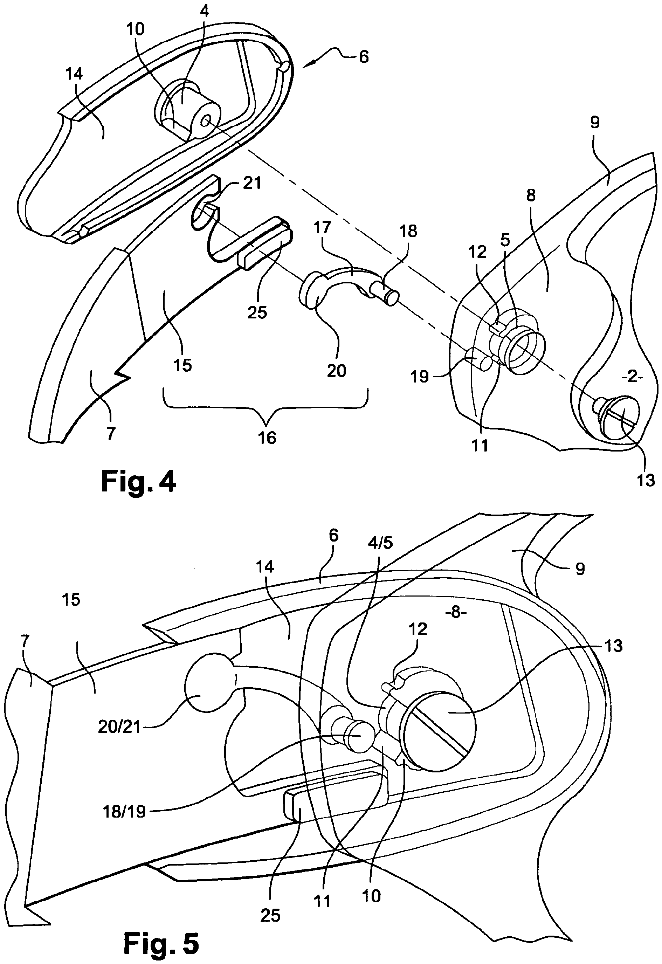

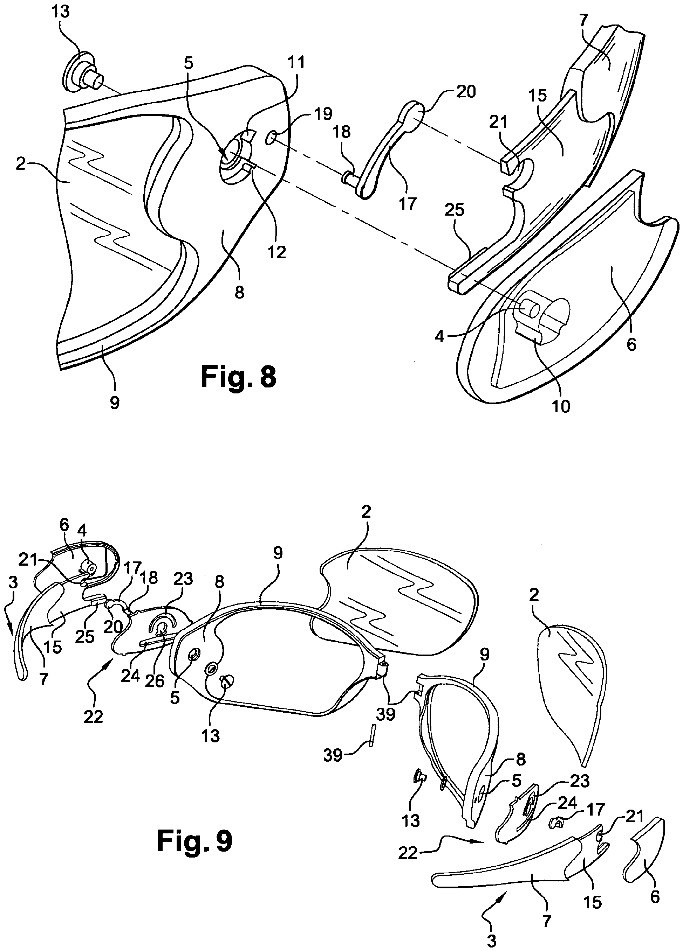

Comme bien visible sur les figures 4 et 8, l'axe de rotation central de la première partie 6 de branche 3 est constitué par un plot cylindrique 4 réalisé sur ladite première partie 6, apte à tourillonner dans un logement 5 correspondant d'une zone d'extrémité externe 8 d'une monture 9, ou inversement, supportant tout ou partie de la façade optique 2, l'axe 4 comportant une butée 10 susceptible de se débattre entre deux butées fixes 11,12 du logement 5, afin de délimiter le débattement angulaire en rotation de la branche 3 par rapport à la monture 9.

Il est à noter que la monture 9 pourra être totale ou partielle par rapport à la face optique 2. Il pourra donc s'agir de lunettes cerclées ou semi cerclées, ou encore de lunettes dites percées.

La liaison mécanique entre la partie d'extrémité 8 de la monture 9 et la partie rotative 6 de la branche 3 s'effectue par l'intermédiaire d'une vis 13 traversant le logement 5 de la partie 8 de la monture 9 et coopérant avec l'axe 4 de la seconde partie rotative 6 de la branche 3.

Selon une autre caractéristique de l'invention, comme on peut le constater sur les figures 4 et 5, la première partie 6 de la branche 3 reliée à l'axe de rotation central 4,5 de la monture 9 forme un capot 14, délimitant avec la face externe de la zone d'extrémité 8 de la monture 9 un fourreau dans lequel est susceptible de coulisser en translation la seconde partie 7 de la branche 3, par l'intermédiaire d'une zone d'extrémité de guidage 15 de celle-ci.

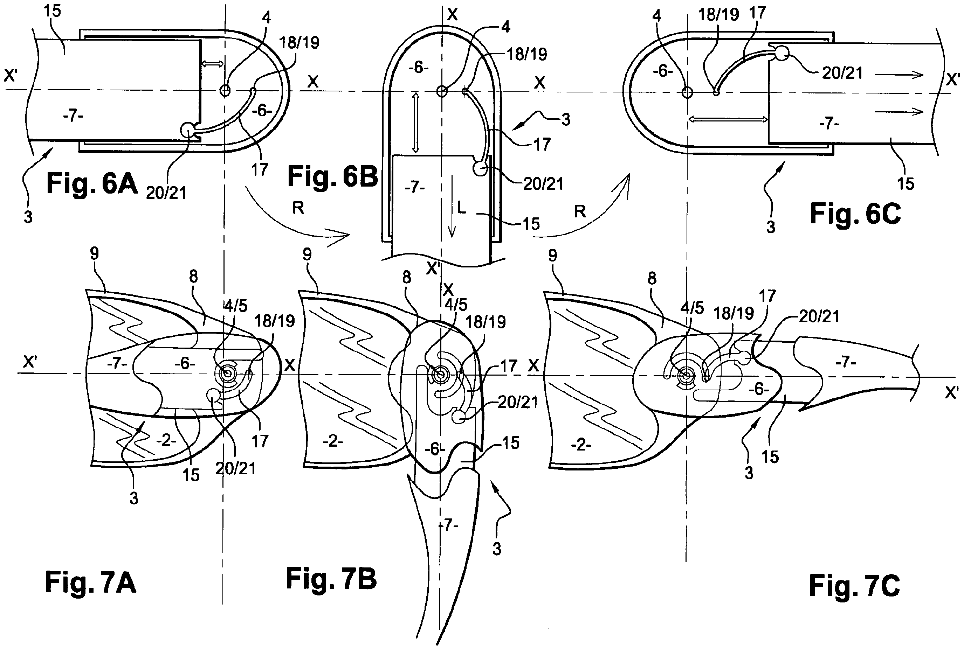

Selon un premier mode de réalisation représenté sur les figures 4 à 9, les moyens 16 d'entraînement en translation de la seconde partie 7 de branche 3 pendant la rotation sont constitués par une biellette 17. Celle-ci est interposée entre d'une part un point d'articulation fixe 18,19 situé à l'extrémité 8 de la monture 9, mais de manière excentrée par rapport à l'axe rotatif 4,5 de ladite première partie 6, et d'autre part un autre point d'articulation mobile 20,21 situé à l'extrémité de la seconde partie 7 de branche 3, mais de façon décalée par rapport à l'axe longitudinal XX'. Ladite biellette 17 a un rayon de courbure apte à permettre un pivotement en rotation de l'ensemble des première partie 6 et seconde partie 7 de branche 3, selon un angle sensiblement de 180°, tout en permettant simultanément le mouvement linéaire en translation de la seconde partie 7 par rapport à la première 6.

Plus précisément, le point d'articulation fixe de la biellette 17 est constitué par un premier pion 18 réalisé à une extrémité de celle-ci, coopérant en rotation avec un trou 19 réalisé à l'extrémité 8 de la monture 9 de façon excentrée par rapport à l'axe de rotation 4,5 de la partie 6 de la branche 3. L'autre point d'articulation mobile de la biellette 17 est constitué par un second pion 20 réalisé à son autre extrémité et apte à coopérer avec un logement correspondant 21 de la zone de guidage 15 de la seconde partie 7 de la branche 3.

Selon une autre caractéristique de l'invention, représentée sur la figure 9, un capot interne intermédiaire 22 est disposé entre la face interne de la zone d'extrémité 8 de la monture 9 et la face interne du capot 14 formé par la première partie 6 de la branche 3 afin de délimiter avec celui-ci le fourreau destiné à la zone d'extrémité de guidage 15 de la seconde partie 7 de la branche 3.

Par ailleurs, le capot intermédiaire 22 comprend d'une part une lumière de dégagement 23 en arc de cercle, dont le centre est celui de l'axe de rotation central 4,5, apte à permettre le débattement rotatif de la seconde partie 7 de branche 3 par rapport au premier pion d'articulation fixe 18 de la biellette 7 sur la monture 9, et d'autre part une lumière rectiligne oblongue 24 destinée au guidage en translation et à la limitation de la course d'un plot 25 de forme correspondante, réalisé en prolongement de la zone d'extrémité de guidage 15 de la seconde partie 7 de branche 3. Ledit capot intermédiaire 22 comprend également un trou de passage 26 de l'axe de rotation central 4 de l'ensemble de branche 3.

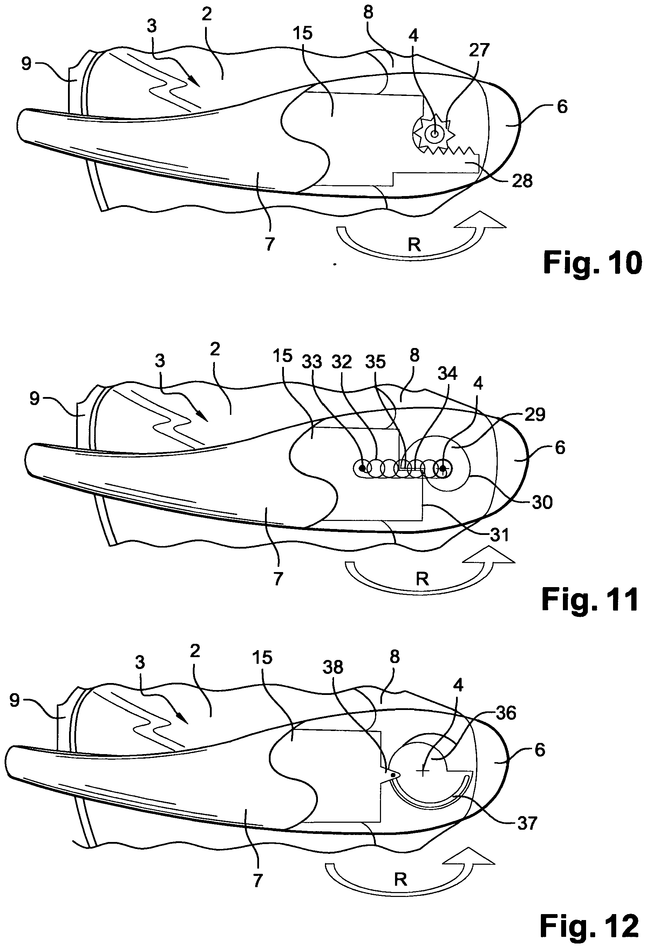

Selon un second mode de réalisation représenté à la figure 10, les moyens d'entraînement en translation de la seconde partie 7 de branche 3 pendant la rotation sont constitués par un pignon denté 27 disposé fixement sur l'axe central 4 de la première partie 6 de branche 3 par rapport auquel pignon 27 peut agir en commande linéaire, dans un sens ou dans l'autre, une crémaillère mobile 28 réalisée sur la zone d'extrémité de guidage 15 de la seconde partie 7 de branche 3.

Selon le troisième exemple de réalisation représenté sur la figure 11, les moyens d'entraînement en translation de la seconde partie 7 de branche 3 pendant la rotation sont constitués par une came 29 disposée fixement sur l'axe central 4 de la première partie 6 de branche 3 et sur la rampe externe 30 de laquelle came 29 prend appui un plan frontal 31 de la zone d'extrémité de guidage 15 de la seconde partie 7 de branche 3, pour un actionnement linéaire de celle-ci dans un sens ou dans l'autre.

Comme on peut le remarquer sur la figure 11, un ressort de rappel 32 agit en traction entre l'axe 4 et un point fixe 33 situé sur la zone d'extrémité de guidage 15.

Il est également prévu une butée d'arrêt en rotation de la branche par un plan 34, perpendiculaire au plan frontal 31 sur lequel vient en appui un plan correspondant 35 de la came 29, sensiblement radial à son axe.

Selon un quatrième mode de réalisation, les moyens d'entraînement en translation de la seconde partie 7 de branche 3 pendant la rotation sont constitués par une came 36 disposée fixement sur l'axe central 4 de la première partie 6 de branche 3, ladite came 36 présentant sur l'un de ses flancs une lumière de guidage 37 suivant le même profil, dans laquelle est susceptible de coulisser un doigt 38 réalisé sur la zone d'extrémité de guidage 15 de la seconde partie 7 de branche 3, pour actionnement linéaire de celle-ci dans un sens ou dans l'autre.

Selon une autre caractéristique de l'invention, comme bien visible sur les figures 3 et 9, la monture 9 est constituée en deux parties distinctes s'articulant symétriquement autour d'un axe de pivotement central 39. De cette manière, peut être obtenu le repliage des lunettes sur elles-mêmes pour en réduire l'encombrement. Chacune des branches 3 se range alors devant la façade optique 2 de galbe sensiblement identique, pour une réduction supplémentaire de l'encombrement, tout en assurant la protection de ladite façade. Les branches 3 étant rétractées automatiquement au cours de cette opération, elles ne dépassent pas la longueur d'une demi monture. L'effet de compacité maximum est ainsi obtenu.

Il est à noter que les différentes pièces constitutives des lunettes ainsi décrites sont réalisées préférentiellement en matière plastique injectée, en métal injecté ou fritté. Elles peuvent aussi être réalisées par formage de métaux ou de composites.

## Revendications

1. Lunettes (1) constituées d'une façade optique ou solaire (2) reliée à deux branches latérales (3), chacune d'elles étant reliée à la façade (2) par l'intermédiaire d'un axe de rotation central (4,5) sensiblement perpendiculaire à celle-ci, la façade présentant un rayon de courbure sensiblement égale à celui de la branche (3), pour permettre la rotation de la branche (3), entre une position d'utilisation (A) et une position de rangement (B) devant la façade (2), **caractérisées en ce que** la dite branche (3) se décompose en deux parties (6,7), la première (6) étant solidaire de l'axe de rotation central (4,5), la seconde (7) étant reliée à la première (6) par des moyens d'entraînement en translation intermédiaires, interposés entre les deux parties et agissant progressivement sur la dite seconde partie (7) au cours de la rotation de la première (6), et conséquemment de la seconde (7), pour impliquer à celle-ci deux mouvements conjugués, l'un rotatif (R), l'autre linéaire (L), afin d'obtenir automatiquement et simultanément un allongement de la branche (3) lorsqu'on la tourne vers une position d'utilisation (A) et un raccourcissement de la même branche, lorsqu'on la tourne vers une position de rangement (B).

2. Lunettes selon la revendication 1, **caractérisées en ce que** l'axe de rotation central de la première partie (6) de branche (3) est constitué par un plot cylindrique (4) réalisé sur ladite première partie (6), apte à tourillonner dans un logement (5) correspondant d'une zone d'extrémité externe (8) d'une monture (9), ou inversement, supportant tout ou partie de la façade optique (2), l'axe (4) comportant une butée (10) susceptible de se débattre entre deux butées fixes (11,12) du logement (5), afin de délimiter le débattement angulaire en rotation de la branche (3) par rapport à la monture (9).

3. Lunettes selon l'une des revendications 1 ou 2, **caractérisées en ce que** la première partie (6) de la branche (3) reliée à l'axe de rotation central (4,5) de la monture (9) forme un capot (14), délimitant avec la face externe de la zone d'extrémité (8) de la monture (9) un fourreau dans lequel est susceptible de coulisser en translation la seconde partie (7) de la branche (3), par l'intermédiaire d'une zone d'extrémité de guidage (15) de celle-ci.

4. Lunettes selon l'unes des revendications 1 à 3, **caractérisées en ce que** les moyens (16) d'entraînement en translation de la seconde partie (7) de branche (3) pendant la rotation sont constitués par une biellette (17) interposée entre d'une part un point d'articulation fixe (18,19) situé à l'extrémité (8) de la monture (9), mais de manière excentrée par rapport à l'axe rotatif (4,5) de ladite première partie (6), et d'autre part un autre point d'articulation mobile (20,21) situé à l'extrémité de la seconde partie (7) de branche (3), mais de façon décalée par rapport à l'axe longitudinal (XX'), ladite biellette (17) ayant un rayon de courbure apte à permettre un pivotement en rotation de l'ensemble des première partie (6) et seconde partie (7) de branche (3), selon un angle sensiblement de 180°, tout en permettant simultanément le mouvement linéaire en translation de la seconde partie (7) par rapport à la première (6).

5. Lunettes selon la revendication 4, **caractérisées en ce que** le point d'articulation fixe de la biellette (17) est constitué par un premier pion (18) réalisé à une extrémité de celle-ci, coopérant en rotation avec un trou (19) réalisé à l'extrémité de la monture (9) de façon excentrée par rapport à l'axe de rotation (4,5) de la partie (6) de la branche (3), et **en ce que** l'autre point d'articulation mobile de la biellette (17) est constitué par un second pion (20) réalisé à son autre extrémité et apte à coopérer avec un logement correspondant (21) de la zone de guidage (15) de la seconde partie (7) de la branche (3).

6. Lunettes selon l'une des revendications 3 à 5, **caractérisées en ce qu'**un capot interne intermédiaire (22) est disposé entre la face interne de la zone d'extrémité (8) de la monture (9) et la face interne du capot (14) formé par la première partie (6) de la branche (3) afin de délimiter avec celui-ci le fourreau destiné à la zone d'extrémité de guidage (15) de la seconde partie (7) de la branche (3).

7. Lunettes selon la revendication 6, **caractérisées en ce que** le capot intermédiaire (22) comprend d'une part une lumière de dégagement (23) en arc de cercle, dont le centre est celui de l'axe de rotation central (4,5), apte à permettre le débattement rotatif de la seconde partie (7) de branche (3) par rapport au premier pion d'articulation fixe (18) de la biellette (7) sur la monture (9), et d'autre part une lumière rectiligne oblongue (24) destinée au guidage en translation et à la limitation de la course d'un plot (25) de forme correspondante, réalisé en prolongement de la zone d'extrémité de guidage (15) de la seconde partie (7) de branche (3), ledit capot intermédiaire (22) comprenant également un trou de passage (26) de l'axe de rotation central (4) de l'ensemble de branche (3).

8. Lunettes selon l'une des revendications 1 à 3, **caractérisées en ce que** les moyens d'entraînement en translation de la seconde partie (7) de branche (3) pendant la rotation sont constitués par un pignon denté (27) disposé fixement sur l'axe central (4) de la première partie (6) de branche (3) par rapport auquel pignon (27) peut agir en commande linéaire, dans un sens ou dans l'autre, une crémaillère mobile (28) réalisée sur la zone d'extrémité de guidage (15) de la seconde partie (7) de branche (3).

9. Lunettes selon l'une des revendications 1 à 3, **caractérisées en ce que** les moyens d'entraînement en translation de la seconde partie (7) de branche (3) pendant la rotation sont constitués par une came (29) disposée fixement sur l'axe central (4) de la première partie (6) de branche (3) et sur la rampe externe (30) de laquelle came (29) prend appui un plan frontal (31) de la zone d'extrémité de guidage (15) de la seconde partie (7) de branche (3), pour un actionnement linéaire de celle-ci dans un sens ou dans l'autre.

10. Lunettes selon l'une des revendications 1 à 3, **caractérisées en ce que** les moyens d'entraînement en translation de la seconde partie (7) de branche (3) pendant la rotation sont constitués par une came (36) disposée fixement sur l'axe central (4) de la première partie (6) de branche (3), ladite came (36) présentant sur l'un de ses flancs une lumière de guidage (37) suivant le même profil, dans laquelle est susceptible de coulisser un doigt (38) réalisé sur la zone d'extrémité de guidage (15) de la seconde partie (7) de branche (3), pour actionnement linéaire de celle-ci dans un sens ou dans l'autre.

11. Lunettes selon l'une des revendications 1 à 10, **caractérisées en ce que** la monture (9) est constituée en deux parties distinctes s'articulant symétriquement autour d'un axe de pivotement central (39), de manière à permettre le repliage des lunettes sur elle-même pour en réduire l'encombrement, chacune des branches (3) se rangeant alors devant la façade optique (2) de galbe sensiblement identique, pour une réduction supplémentaire de l'encombrement, tout en assurant la protection de ladite façade, les branches (3) étant rétractées automatiquement au cours de cette opération, pour ne pas dépasser la longueur d'une demi monture, pour un effet de compacité maximum.

## Claims

1. Spectacles (1) comprised of a optical or solar façade (2) connected to two sidepieces (3), each of which are connected to the façade (2) by means of a central rotational axis (4, 5) substantially perpendicular to the latter, the façade having a radius of curvature substantially equal to that of the sidepiece (3), in order to allow for the rotation of the sidepiece (3), between a use position (A) and a storage position (B) in front of the façade (2), **characterised in that** said sidepiece (3) is divided into two portions (6, 7), the first (6) being integral with the central rotational axis (4, 5), the second (7) being connected to the first (6) by intermediate translational movement means, disposed between the two portions and acting progressively on said second portion (7) during the rotation of the first (6), and consequently the second (7), so as to subject the latter to two combined movements, one rotational (R), and the other linear (L), in order to obtain automatically and simultaneously a lengthening of the sidepiece (3) when it is rotated to the use position (A) and a shortening of the same sidepiece, when it is rotated to the storage position (B).

2. Spectacles according to claim 1, **characterised in that** the central rotational axis of the first portion (6) of the sidepiece (3) is comprised of a cylindrical post (4) carried out on said first portion (6), able to journal in a housing (5) corresponding to an external end zone (8) of a frame (9), or inversely, supporting all or a portion of the optical façade (2), the axis (4) comprising a stop (10) able to be displaced between two fixed stops (11, 12) of the housing (5), in order to delimit the angular displacement in rotation of the sidepiece (3) in relation to the frame (9).

3. Spectacles according to one of claims 1 or 2, **characterised in that** the first portion (6) of the sidepiece (3) connected to the central rotational axis (4, 5) of the frame (9) forms a cover (14), delimiting with the external face of the end zone (8) of the frame (9) a shaft wherein is able to slide in translation the second portion (7) of the sidepiece (3), by means of a guiding end zone (15) of the latter.

4. Spectacles according to one of claims 1 to 3, **characterised in that** the means (16) of translational movement of the second portion (7) of the sidepiece (3) during the rotation are comprised of a connecting rod (17) disposed between on the one hand a fixed point of articulation (18, 19) located at the end (8) of the frame (9), but in an off-centred manner in relation to the rotational axis (4, 5) of said first portion (6), and on the other hand another point of movable articulation (20, 21) located at the end of the second portion (7) of the sidepiece (3), but in an offset manner in relation to the longitudinal axis (XX'), said connecting rod (17) having a radius of curvature able to allow for a pivoting in rotation of the entire first portion (6) and second portion (7) of the sidepiece (3), according to an angle substantially of 180°, while still allowing simultaneously for the linear movement in translation of the second portion (7) in relation to the first (6).

5. Spectacles according to claim 4, **characterised in that** the fixed point of articulation of the connecting rod (17) is comprised of a first pin (18) carried out at an end of the latter, cooperating in rotation with a hole (19) carried out at the end of the frame (9) in an off-centre manner in relation to the rotational axis (4, 5) of the portion (6) of the sidepiece (3), and **in that** the other point of movable articulation of the connecting rod (17) is constituted of a second pin (20) carried out at its other end and able to cooperate with a corresponding housing (21) of the guiding zone (15) of the second portion (7) of the sidepiece (3).

6. Spectacles according to one of claims 3 to 5, **characterised in that** an intermediate internal cover (22) is arranged between the internal face of the end zone (8) of the frame (9) and the internal face of the cover (14) formed by the first portion (6) of the sidepiece (3) in order to delimit with the latter the shaft intended for the guiding end zone (15) of the second portion (7) of the sidepiece (3).

7. Spectacles according to claim 6, **characterised in that** intermediate cover (22) comprises on the one hand a clearance hole (23) in the form of an arc of a circle, of which the centre is that of the central rotational axis (4, 5), able to allow for the rotational displacement of the second portion (7) of the sidepiece (3) in relation to the first articulation pin (18) of the connecting rod (7) on the frame (9), and on the other hand a straight oblong hole (24) intended for the guiding in translation and the limitation of the travel of a post (25) of corresponding shape, carried out as an extension of the guiding end zone (15) of the second portion (7) of the sidepiece (3), said intermediate cover (22) further comprising a passage hole (26) for the central rotational axis (4) of the entire sidepiece (3).

8. Spectacles according to one of claims 1 to 3, **characterised in that** the translational movement means of the second portion (7) of the sidepiece (3) during the rotation are comprised of a sprocket wheel (27) arranged rigidly on the central axis (4) of the first portion (6) of the sidepiece (3) in relation to which the sprocket wheel (27) can act as a linear control, in one direction or in the other, a movable rack (28) carried out on the guiding end zone (15) of the second portion (7) of the sidepiece (3).

9. Spectacles according to one of claims 1 to 3, **characterised in that** the translational movement means of the second portion (7) of the sidepiece (3) during the rotation are comprised of a cam (29) arranged rigidly on the central axis (4) of the first portion (6) of the sidepiece (3) and on the external ramp (30) of which cam (29) presses against a frontal plane (31) of the guiding end zone (15) of the second portion (7) of the sidepiece (3), for a linear actuation of the latter in one direction or the other.

10. Spectacles according to one of claims 1 to 3, **characterised in that** translational movement means of the second portion of the second portion (7) of the sidepiece (3) during the rotation are comprised of a cam (36) arranged rigidly on the central axis (4) of the first portion (6) of the sidepiece (3), said cam (36) having on one of its flanks a guiding hole (37) according to the same profile, wherein is able to slide a finger (38) carried out on the guiding end zone (15) of the second portion (7) of the sidepiece (3), for linear actuation of the latter in one direction or the other.

11. Spectacles according to one of claims 1 to 10, **characterised in that** the frame (9) is comprised of two separate portions which are articulated symmetrically around a central pivoting axis (39), in such a way as to allow for the folding back of the spectacles on themselves in order to reduce the encumbrance thereof, with each of the sidepieces (3) then becoming stored in front of the optical façade (2) with a substantially identical curve, for an additional reduction in the encumbrance, while still providing for the protection of said façade, the sidepieces (3) being automatically retracted during this operation, in order to not exceed the length of a half-frame, for a maximum effect of compactness.

## Patentansprüche

1. Brille (1), bestehend aus einer optischen oder Sonnenschutz-Vorderseite (2), verbunden mit zwei seitlichen Armen (2), von denen jeder mit der Vorderseite (2) über eine zentrale Drehachse (4, 5) verbunden ist, die im Wesentlichen senkrecht zu dieser ist, wobei die Vorderseite einen Krümmungsradius aufweist, der im Wesentlichen gleich demjenigen des Arms (3) ist, um die Drehung des Arms (3) zwischen einer Verwendungsposition (A) und einer Aufbewahrungsposition (B) vor der Vorderseite zu ermöglichen, **dadurch gekennzeichnet, dass** der Arm (3) in zwei Teile (6, 7) unterteilt ist, wobei der erste (6) mit der zentralen Rotationsachse (4, 5) fest verbunden ist, wobei der zweite (7) mit der ersten (6) durch dazwischen liegende Mittel zur translatorischen Mitführung verbunden ist, die zwischen den zwei Teilen angebracht sind und fortschreitend auf den zweiten Teil (7) im Laufe der Drehung des ersten (6) und folglich des zweiten (7) wirken, um diesen zwei miteinander verbundenen Bewegungen auszusetzen, einer drehenden (R), der anderen linear (L), um automatisch und gleichzeitig eine Verlängerung des Arms (3) zu erhalten, wenn er in eine Verwendungsposition (A) gedreht wird, und eine Verkürzung des gleichen Arms, wenn er in eine Aufbewahrungsposition (B) gedreht wird.

2. Brille nach Anspruch 1, **dadurch gekennzeichnet, dass** die zentrale Drehachse des ersten Teils (6) des Arms (3) aus einem zylindrischen Kontakt (4) besteht, der auf dem ersten Teil (6) durchgeführt ist, dazu geeignet, in einer entsprechenden Lagerung (5) eines äußeren Endbereichs (8) eines Gestells (9) zu drehen oder umgekehrt, wobei der gesamte oder ein Teil der optischen Vorderseite (2) getragen wird, wobei die Achse (4) einen Anschlag (10) umfasst, der zwischen zwei festen Anschlägen (11, 12) der Lagerung (5) bewegt werden kann, um die Winkeldrehbewegung des Arms (3) mit Bezug auf die Fassung (9) zu begrenzen.

3. Brille nach einem der Ansprüche 1 oder 2, **dadurch gekennzeichnet, dass** der erste Teil (6) des Arms (3), verbunden mit der zentralen Rotationsachse (4, 5) des Gestells (9) eine Kappe (14) bildet, die mit der äußeren Seite des Endbereichs (8) des Gestells (9) eine Hülse begrenzt, in der der zweite Teil (7) des Arms (3) mit Hilfe eines Führungsendbereichs (15) dieses translatorisch gleiten kann.

4. Brille nach einem der Ansprüche 1 bis 3, **dadurch gekennzeichnet, dass** die Mittel (16) zur translatorischen Mitführung des zweiten Teils (7) des Arms (3) während der Drehung aus einem Hebel (17) bestehen, der zwischen einerseits einem festen Gelenkpunkt (18, 19) angebracht ist, der sich am Ende (8) der Fassung (9) befindet, jedoch auf exzentrische Weise mit Bezug auf die Drehachse (4, 5) des ersten Teils (6), und andererseits einem weiteren beweglichen Gelenkpunkt (20, 21), der sich am Ende des zweiten Teils (7) der Arms (3) befindet, jedoch auf versetzte Weise mit Bezug auf die Längsachse (XX'), wobei der Hebel (17) einen Krümmungsradius aufweist, der dazu geeignet ist, eine Drehbewegung der Gesamtheit des ersten Teils (6) und des zweiten Teils (7) des Arms (3) gemäß einem Winkel zu ermöglichen, der im Wesentlichen 180° beträgt, wobei gleichzeitig die lineare translatorische Bewegung des zweiten Teils (7) mit Bezug auf den ersten (6) ermöglicht wird.

5. Brille nach Anspruch 4, **dadurch gekennzeichnet, dass** der feste Gelenkpunkt des Hebels (17) aus einem ersten Stift (18) gebildet ist, der an einem Ende dieses durchgeführt ist und in Drehung mit einem Loch (19) zusammenarbeitet, das am Ende des Gestells (9) auf exzentrische Weise mit Bezug auf die Drehachse (4, 5) des Teils (6) des Arms (3) durchgeführt ist, und dass der andere bewegliche Gelenkpunkt des Hebels (17) aus einem zweiten Stift (20) gebildet ist, der an seinem anderen Ende durchgeführt ist und dazu ausgelegt ist, mit einer entsprechenden Lagerung (21) des Führungsbereichs (15) des zweiten Teils (7) des Arms (3) zusammenzuarbeiten.

6. Brille nach einem der Ansprüche 3 bis 5, **dadurch gekennzeichnet, dass** eine dazwischen liegende interne Kappe (22) zwischen der inneren Seite des Endbereichs (8) der Fassung (9) und der inneren Seite der Kappe (14), gebildet aus dem ersten Teil (6) des Arms (3), angebracht ist, um mit dieser die Hülse zu begrenzen, die für den Führungsendbereich (15) des zweiten Teils (7) des Arms (3) vorgesehen ist.

7. Brille nach Anspruch 6, **dadurch gekennzeichnet, dass** die dazwischen liegende Kappe (22) einerseits eine Freigabeöffnung (23) in einem Kreisbogen umfasst, dessen Zentrum dasjenige der zentralen Drehachse (4, 5) ist, dazu ausgelegt, die Drehbewegung des zweiten Teils (7) des Arms (3) mit Bezug auf den ersten festen Gelenkstift (18) des Hebels (7) auf das Gestell (9) zu ermöglichen, und andererseits eine verlängerte geradlinige Öffnung (24), die für die translatorische Führung und die Begrenzung des Laufs eines Kontakts (25) mit entsprechender Form vorgesehen ist, durchgeführt in Verlängerung des Führungsendbereichs (15) des zweiten Teils (7) des Arms (3), wobei die dazwischen liegende Kappe (22) ebenfalls ein Durchgangsloch (26) der zentralen Drehachse (4) der Gesamtheit des Arms (3) umfasst.

8. Brille nach einem der Ansprüche 1 bis 3, **dadurch gekennzeichnet, dass** die Mittel zur translatorischen Mitführung des zweiten Teils (7) des Arms (3) während der Drehung aus einem Zahnritzel (27) gebildet sind, das fest auf der zentralen Achse (4) des ersten Teils (6) des Arms (3) angebracht ist, wobei mit Bezug auf das Ritzel (27) in linearem Antrieb in der einen oder der anderen Richtung eine bewegliche Zahnstange (28) wirken kann, die im Führungsendbereich (15) des zweiten Teils (7) des Arms (3) durchgeführt ist.

9. Brille nach einem der Ansprüche 1 bis 3, **dadurch gekennzeichnet, dass** die Mittel zur translatorischen Mitführung des zweiten Teils (7) des Arms (3) während der Drehung aus einem Nocken (29) bestehen, der fest auf der zentralen Achse (4) des ersten Teils (6) des Arms (3) angeordnet ist, und wobei auf der äußeren Rampe (30) des Nockens (29) eine vordere Ebene (31) des Führungsendbereichs (15) des zweiten Teils (7) des Arms (3) aufliegt, für eine lineare Betätigung dieses in der einen oder der anderen Richtung.

10. Brille nach einem der Ansprüche 1 bis 3, **dadurch gekennzeichnet, dass** die Mittel zur translatorischen Mitführung des zweiten Teils (7) des Arms (3) während der Drehung aus einem Nocken (36) bestehen, der fest auf der zentralen Achse (4) des ersten Teils (6) des Arms (3) angebracht ist, wobei der Nocken (36) auf einer seiner Flanken eine Führungsöffnung (37) aufweist, die dem gleichen Profil folgt, in der ein Finger (38) gleiten kann, durchgeführt auf dem Führungsendbereich (15) des zweiten Teils (7) des Arms (3), für eine lineare Betätigung dieses in der einen oder der anderen Richtung.

11. Brille nach einem der Ansprüche 1 bis 10, **dadurch gekennzeichnet, dass** das Gestell (9) aus zwei verschiedenen Teilen besteht, die symmetrisch um eine zentrale Drehachse (39) gelenkig verbunden sind, um das Zusammenklappen der Brille auf sich selbst zu ermöglichen, um die Abmessungen davon zu reduzieren, wobei sich dann jeder der Arme (3) vor der optischen Vorderseite (2) mit im Wesentlichen identischen Konturen anordnet, um eine zusätzliche Reduzierung der Abmessungen zu erreichen und gleichzeitig den Schutz der Vorderseite sicherzustellen, wobei die Arme (3) automatisch im Laufe dieses Vorgangs zurückgezogen werden, um die Länge einem halben Gestell nicht zu übersteigen, um eine maximale Kompaktheit zu erzielen.
